# EUROPEAN PATENT APPLICATION

(11) **EP 1 079 567 A2**
(43) Date of publication of application: **28.02.2001**
(21) Application number: 00307209.7
(22) Date of filing: 22.08.2000
(51) Int. Cl.: H04L 12/24

(54) **A method for selective data-communications duplication**

(30) Priority: 24.08.1999 US 382223
(71) Applicant: EDSL Networks Limited, Hod Hasharon 45000 (IL)
(72) Inventor: Oberlander, Alex, Petah Tikva 49600 (IL)
(74) Representative: Atkinson, Ralph

(57) **Abstract**

A method for selective data-communications duplication, the method includes the steps of: for substantially each packet of a plurality of packets traversing a first juncture in a data-communications network: (a) examining an aggregate of at least one predetermined metric of the packet; and (b) if the examined aggregate satisfies a threshold criterion then sending a copy of the packet to a second juncture in the data-communications network. According to the preferred embodiment, by duplicating selected packets at a first juncture and sending these duplicates to a second juncture, URL information is thereby extracted from HTTP sessions between users and servers, and analyzing URLs referenced by users of HTTP clients is facilitated at the second juncture.

## Description

### Field Of The Invention

The present invention generally relates to processing a stream of data-communications packets. More specifically, the present invention relates to providing third party access to some of the contents contained in the stream of data-communications packets.

### Background of the Invention

Data-communications systems, having a topologically connected graph of nodes that share an agreed protocol for transferring packets, are currently very popular. These systems often include task specific junctures, such as user access connections, protocol transforming gateways, routers, servers, portals, and the like. Intrinsically, it is the topology of the graph and the inclusion of task specific nodes that differentiates between Local Area Networks (LAN), Wide Area Networks (WAN), Inter-nets, Intra-nets, etc.

Sometimes, specific functions are enabled at particular junctures, or using the cooperation of more than one juncture. For example, sometimes it is desirable to maintain a copy of all packets traversing a particular node. When this is the case, a copy of every packet traversing the node is made, and this duplicated stream of packets is stored in some local or remote memory media. The memory media is then accessible for research, analysis, or de facto security purposes.

Another typical juncture enable function is the firewall, which essentially scans a traversing stream of packets. The processor of the firewall decides for each packet if the packet should be passed on or discarded.

Between the cumbersome "copy all packet" example and the selective packet discarding firewall example, there is a need in the art for selectively copying some of the packets. More specifically, there is a need in the art for third party monitoring of a selected subset of node traversing packets. This is especially true since a third party may evaluate and compare selected subsets from an ensemble of nodes in order to facilitate numerous diverse economic improvements; such as network load balancing, market research, etc.

### Summary of the Invention

The present invention relates to a method for selective data-communications duplication. This method includes the steps of: for substantially each packet of a plurality of packets traversing a first juncture in a data-communications network; examining an aggregate of at least one predetermined metric of the packet; and if the examined aggregate satisfies a threshold criterion then sending a copy of the packet to a second juncture in the data-communications network.

Simply stated, the present invention is a selective packet duplication "filter." Normally, one thinks of a filter in a negative sense of "filtering out" selective items. Here, one need think of a filter in a positive sense of "filtering in" selected duplicated items, which are sent to a location different from that of the original items.

The present method operates at a pair of presumably cooperating locations in a data-communications system, such as at two locations in the Internet. At a first location, a process operates by looking at an exogenous aspect of each traversing packet, such as packet size, or a specific header code. The exogenous aspect is generally selected as a facile-to-monitor feature, the logical processing of which will not incur any observable packet delay. Essentially, at the first location, in the monitored stream of packets, every traversing packet, that logically satisfies the exogenous aspect condition, is duplicated. The packet duplicate is then sent to the second cooperating location, where it is stored or analyzed, as appropriate.

However, the co-operation or processing of the second location is not required for the present invention. According to one non-limiting example, the second location may elect to receive duplicated packets from a known first location only when the second location has an available memory resource wherein to store the duplicated packets. Otherwise, the second location may simply discard all the incoming duplicated packets. According to another non-limiting example, the second location may be the designated recipient for duplicated packets from many first "type" locations. In this example the second location may be interested in capturing a correlation between an arbitrary pair of first locations, so the duplicates from other first "type" locations may not be relevant in the second location's present correlation task.

Turning again to the method of the present invention, this method includes the steps of: for substantially each packet of a plurality of packets traversing a first juncture in a data-communications network; examining an aggregate of at least one predetermined metric of the packet; and if the examined aggregate satisfies a threshold criterion then sending a copy of the packet to a second juncture in the data-communications network.

At the first juncture, a process operates on "substantially each packet" of a plurality of traversing packets. If the purpose of the process is to capture network load balancing or market research data, then it is not usually necessary to consider every traversing packet. A processing considering a statistically significant sampling of traversing packets is sufficient to achieve the data capture goal. Alternatively, if the "aggregate of at least one predetermined metric of the packet" is not facile to acquire or to compute, then the process may be operating on a lesser percentage of traversing packets; so as not to adversely introduce any noticeable delay into the transferring of the original stream of packets. Simply stated, the efficiency of the present method depends on choosing a simple metric or on choosing a simple aggregate of simple metrics. Alternatively, when convoluted metrics are used, the efficiency of the present method depends on considering processing selected packets in the stream of packets during low communications load periods at the first juncture. This choice of low load periods creates the appearance to the user of a higher load period, because the process is laboriously considering the convoluted metric.

According to an embodiment of the present method, examining includes calculating at least one metric of the at least one predetermined metric of the packet. While according to the preferred facile embodiment, the at least one metric is a location in the packet, here a metric needs to be calculated. For example, if a variable length packet protocol describes each packets length using a header segment and a trailer segment, then the packet length needs to be calculated when "packet length" is an examined metric. There are other protocols, which are more amenable to the preferred embodiment of the present method, where packet variable length is captured in a fixed location in the packet header.

According to a specific embodiment of the present method, a metric, of the at least one predetermined metric of the packet, is packet size.

According to another specific embodiment of the present method, a metric, of the at least one predetermined metric of the packet, is a data element of the packet's header. The date element may be day, month, year, hour, minute, time zone, etc. or any combination thereof.

According to another embodiment of the present method, the aggregate includes at least one metric of a previously examined packet. By way of a non-limiting example, the specific packet, which is of interest to duplicate, may always have a length of between one hundred and one hundred and twenty bytes. However, there may also be many other packets that have a length of between one hundred and one hundred and twenty bytes. One way to improve the process efficiency may be to introduce the observation that the specific packets of interest always follow in the packet stream immediately after a characteristic packet, which always has a specific sequence of coding in bytes twelve through eighteen. Therefore, the specific packet of interest is duplicated and sent to the second juncture if the packets length is between one hundred and one hundred and twenty bytes AND if the immediately preceding packet in the packet stream had the requisite sequence of coding in the designated field.

According to various specific embodiments of the present method, the first juncture is a network-access connection interface, a network router, a network-client server, an inter-network gateway, or the like. Generally speaking, the method of the present invention may be implemented at any node in the data-communications system that is protocol compatible and that has sufficient processing and buffering resources to implement the steps of the method.

According to another specific embodiment of the present method, sending a copy includes appending a tag to the copy. According to another non-limiting example, the tag may be a time stamp indicating when this packet was duplicated. According to a further specific embodiment of the present method, the tag includes a code identifying a source of the packet, or an identification of the first juncture, or a destination of the packet other than the second juncture. Using the example above where a single second juncture receives duplicates from a plurality of first junctures, the tag may be an identification code specifying which first juncture is the source of the duplicate packet.

According to another embodiment of the present method, sending a copy of the packet to a second juncture in the data-communications network includes sending a copy of the packet to a tertiary juncture in the data-communications network. While in a previous example the case of multiple first junctures relating to a single second juncture was considered, here the case of a single first juncture sending copies of selected packets to multiple second junctures is considered. According to another non-limiting example, the method of the present invention is implemented as a first juncture as a security monitor. In this capacity, each packet that might trigger a negative firewall filter response is copied and sent to a second juncture (a computer virus monitoring center), while a select subset of these dangerous packets is also duplicated and sent to a tertiary juncture (an emergency response computer epidemiological clinic).

According to the preferred embodiment of the present method, examining is only done to packets traversing the first juncture in a predetermined direction. According to another non-limiting example, where the present method is implemented at a processor of a user access port, the processor examines packets being sent by the user and does not examine packets being received by the user.

The present invention also relates to a selective data-communications duplication apparatus. This apparatus includes: a computation processor having: at least one connector for interconnection to a data-communications network at a first juncture in a network; a first component that, for substantially every packet traversing the first juncture, examines an aggregate of at least one predetermined metric of the packet; and a second component that, for each examined aggregate which satisfies a threshold criterion, is operative to copy the packet and to address the copy of the packet for delivery to a second juncture in the data-communications network, and is further operative to send the copy of the packet into the data-communications network via at least one of the at least one connectors.

Furthermore, the present invention relates to a program storage device readable by a machine, tangibly embodying a program of instructions executable by the machine to perform method steps for a method for selective data-communications duplication, the method steps including: for substantially each packet of a plurality of packets traversing a first juncture in a data-communications network: examining an aggregate of at least one predetermined metric of the packet; and if the examined aggregate satisfies a threshold criterion then sending a copy of the packet to a second juncture in the data-communications network.

### Brief Description of the Drawings

In order to understand the invention and to see how it may be carried out in practice, a preferred embodiment will now be described, by way of non-limiting example only, with reference to the accompanying drawings, in which:
*Figure 1* illustrates a schematic view of a data-communications network topology wherein the method of the present invention is installed;
*Figure 2* illustrates a schematic view of selective duplication operations on a packet in a packet stream;
*Figure 3* illustrates a schematic view of selective duplication apparatus; and
*Figure 4* illustrates a schematic view of another selective duplication apparatus.

### Detailed Description of the Invention

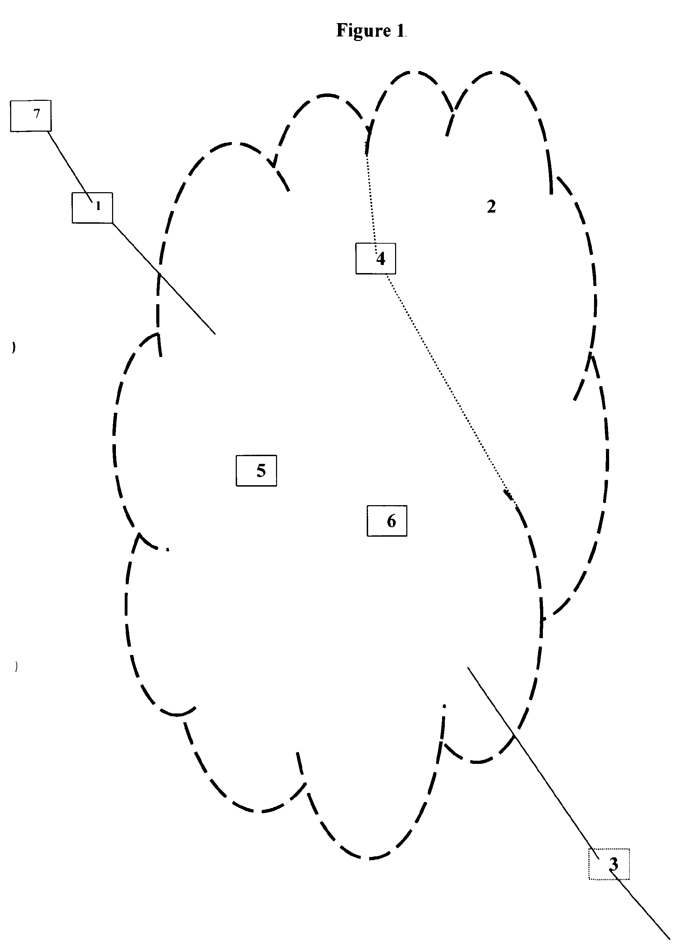

*Figure 1* illustrates a schematic view of a data-communications network topology wherein the method of the present invention is installed. Here a first juncture processor **1**, located at a network-access connection interface, screens an incoming packet stream for packets that satisfy a designated metric condition. Packets that satisfy this condition are duplicated and sent into the same data-communications network topology **2**, albeit addressed to a second juncture processor **3**. There is a very low probability that the original packet is also addressed to the same second juncture processor.

Alternatively, the first juncture processor might be located at a router **6**, at a network-client server **5**, or at an inter-network gateway **4**.

Simply stated, a scenario of selective duplication could include first juncture processor **1** functioning as an access port for a external communications network, such as a Local Area Network **7**. All packets from the LAN to any address in the data-communications network topology **2** (e.g. the Internet) are passed by the access port from the LAN to the Internet, for delivery to what ever destination address has been designated. While the first juncture processor likewise examines each packet to see if it satisfies a designated metric condition. Should the condition be satisfied then the first junction processor address a copy of the packet to a second junction processor (e.g. any of nodes **3, 4, 5,** or **6**) and likewise passes the copied packet to the Internet, for delivery to what ever destination address has been designated as the second junction processor. Alternatively, an address on the LAN could be designated as the second junction processor, and the packet is passes back into the LAN.

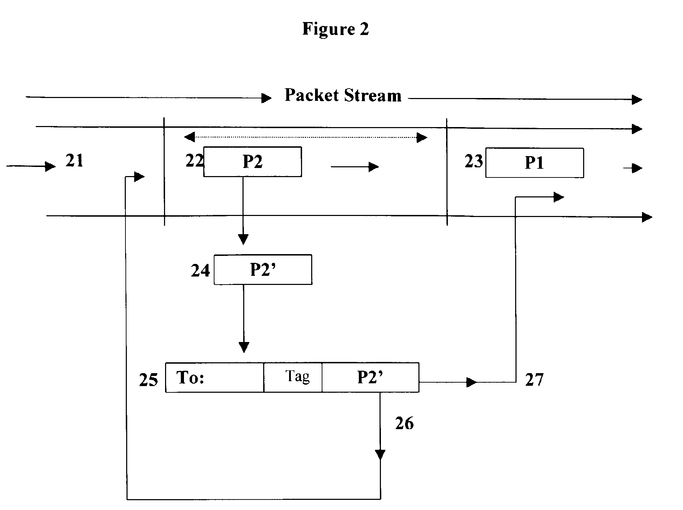

*Figure 2* illustrates a schematic view of selective duplication operations on a packet in a packet stream. Starting from the input side **21**, a packet "P2" enters an examination region **22**. For convenience, the packet P2 is passed directly to the output region **23**, after a copy P2' is taken for consideration. A previous packet P1 has already undergone this sequential transit. The packet copy P2' is examined **24** according to at least one predetermined metric, which may include a metric of P1. If a threshold criterion of the P2' packet is satisfied, then P2' is prepared for sending **25** onto another target address (different from the target address of P2) designated as a second juncture's address. This preparation may include adding a "To:" address field, adding a "tag", etc. Then the prepared copy of P2' may be sent to a second juncture address, which may even be accomplished by sending it back into the original input to the packet stream via **26**.

Simply stated, there are numerous substantially equivalent scenarios to implement the method of the present invention.

According to one scenario, if introducing packet delay is not problematic, then the actual packet can be stopped at a first juncture and this actual packet's metric is calculated, aggregated, examined, or evaluated, as is necessary to determine if this packet should be duplicated. If the threshold criterion for the metric is fulfilled then a copy of the packet is made and the original packet is allowed to proceed in its original delivery transfer processing. The copy is addressed to a second juncture and this address copy is likewise directed to proceed in its required delivery transfer processing.

According to another scenario, if introducing packet delay is problematic, then every actual packet can be duplicated at a first juncture and this duplicate packet's metric is calculated, aggregated, examined, or evaluated, as is necessary to determine if this packet should be directed to a second juncture, while the original packet is allowed to proceed in its original delivery transfer processing. If the threshold criterion for the metric is fulfilled then the copy of the packet is made and is addressed to a second juncture, and this address copy is likewise directed to proceed in its required delivery transfer processing. According to one variation, this is accomplished by sending the copy back into the original input to the packet stream via **26**. According to another variation, this is accomplished by sending the copy directly to the output region **23** via **27**.

According to the preferred embodiment of the present invention, URL information is extracted from HTTP sessions between users and servers. In this context the method of the present invention relates to a mechanism for extracting and analyzing URLs referenced by users of HTTP clients, i.e. browsers. The result of the process may have numerous applications, such as accurate advertisement that take the user interests into effect and possible network setup optimization by creating direct PVCs across a network to the popular sites or enhancing caching and proxy operations.

Since the advent of the HTTP protocol, commercial applications started to evolve by utilizing the advanced user interfaces used for the client side. Especially noted are Netscape Navigator and Microsoft Explorer. The growth of the Internet users community helped adding value into advertisement based sites.

The method of the present invention may be used to create, at the second juncture, a knowledge base of the users whereabouts. This information can be used for displaying advertisements on the user's screen that applies to the user's interests. In addition, an accurate statistics of the popular sites can be made so the network manager may reduce the number of hops by adding direct PVC between the network central routers and the popular sites. Also, cache and proxy servers operations can be optimized.

The initial stage in the analysis is the extraction of the URL sent from the user to the web site. HTTP uses the TCP layer as its transport. A TCP/IP connection is made for each and every object requested from the browser, be it an HTML file, a picture of any type, an audio or video clip. In summary, the following steps are defined in the process of downloading an objet via HTTP:
- TCP connection stage.
- Browser sends the HTTP request with the URL.
- Server responds with an answer.
- Connection closed.

The second stage where the browser sends the URL is the packet that needs to be replicated so a copy of it should be sent to a processing server (the second juncture).

The identification of the packet bearing the URL is as follows:
Protocol type = TCP.
Destination port = 80.
Packet size > 100 bytes.

By allocating a port dedicated for the purpose of updating the analyzing server, the examining and sending may be accomplished in an existing processor. The proposed transport for this protocol is UDP. In order to simplify the task of sending these packets from access devices, the suggested protocol is to encapsulate the data of the TCP/IP packet within a new header that will direct the packet to the analyzing server. It's optional to save the data of these packets within a large buffer that can contain a number of packets. This buffer should be sent once a maximum size is reached. In either case, the access device may add information that identifies the user by a customer ID or similar method.

Once information is received at the analyzing server, each packet should be inserted into a collection database. A natural choice for a database for this type of data may be a relational database sorted by a few indexes such as URL (in compact form), customer ID and time (year/month/day).

If a network manager wants to see which sites are popular, a report that lists the most popular sites can be made. It may be possible to reduce the number of hops by adding PVCs that create shortcuts through the public network and/or suggests that adding a router at a certain location may help reduce bottle necks.

Another application may be creating an index file sorted by subject of interest of a user in order to create in real-time an accurate advertisement when the user surfs through a site that reserves space for advertisements. The service provider would naturally supply the means of displaying the advertisement and perhaps for a fee.

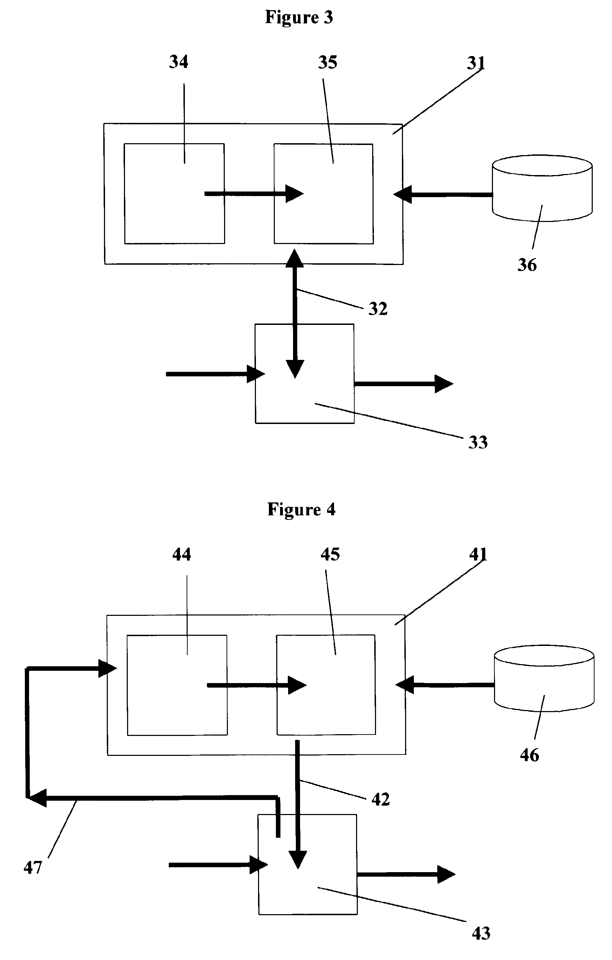

*Figures 3* and *4* which illustrate a schematic views of selective duplication apparatus. For example, this apparatus includes: a computation processor **31** having:
- at least one connector **32** for interconnection to a data-communications network at a first juncture **33** in a network;
- a first component **34** that, for substantially every packet traversing the first juncture, examines an aggregate of at least one predetermined metric of the packet; and
- a second component **35** that, for each examined aggregate which satisfies a threshold criterion, is operative to copy the packet and to address the copy of the packet for delivery to a second juncture in the data-communications network, and is further operative to send the copy of the packet into the data-communications network via at least one of the at least one connectors.

Alternatively, this apparatus includes: a computation processor **41** having:
- at least one connector **42 47** for interconnection to a data-communications network at a first juncture **43** in a network;
- a first component **44** that, for substantially every packet traversing the first juncture, examines an aggregate of at least one predetermined metric of the packet; and
- a second component **45** that, for each examined aggregate which satisfies a threshold criterion, is operative to copy the packet and to address the copy of the packet for delivery to a second juncture in the data-communications network, and is further operative to send the copy of the packet into the data-communications network via at least one of the at least one connectors.

Furthermore, the present invention relates to a program storage device **36 or 46** readable by a machine (such as apparatus **31-35 or 41-45**), tangibly embodying a program of instructions executable by the machine to perform method steps for a method for selective data-communications duplication, the method steps including: for substantially each packet of a plurality of packets traversing a first juncture in a data-communications network
- examining an aggregate of at least one predetermined metric of the packet; and
- if the examined aggregate satisfies a threshold criterion then sending a copy of the packet to a second juncture in the data-communications network.

The present invention has been described to a certain degree of peculiarity using substantially non-binding examples. Those versed in the art will recognize that the present invention may be manifest alternatively without traversing beyond its scope or spirit.

## Claims

1. A method for selective data-communications duplication, the method including the steps of: for substantially each packet of a plurality of packets traversing a first juncture in a data-communications network:
examining an aggregate of at least one predetermined metric of the packet; and
if the examined aggregate satisfies a threshold criterion then sending a copy of the packet to a second juncture in the data-communications network.

2. The method according to claim **1** wherein examining includes calculating at least one metric of the at least one predetermined metric of the packet.

3. The method according to claim **1** wherein a metric, of the at least one predetermined metric of the packet, is packet size.

4. The method according to claim **1** wherein a metric, of the at least one predetermined metric of the packet, is a data element of the packet's header.

5. The method according to claim **1** wherein the aggregate includes at least one metric of a previously examined packet.

6. The method according to claim **1** wherein the first juncture is a network-access connection interface.

7. The method according to claim **1** wherein the first juncture is a network router.

8. The method according to claim **1** wherein the first juncture is a network-client server.

9. The method according to claim **1** wherein the first juncture is an inter-network gateway.

10. The method according to claim **1** wherein sending a copy includes appending a tag to the copy.

11. The method according to claim **10** wherein the tag includes a code identifying a source of the packet, or an identification of the first juncture, or a destination of the packet other than the second juncture.

12. The method according to claim **1** wherein sending a copy of the packet to a second juncture in the data-communications network includes sending a copy of the packet to a tertiary juncture in the data-communications network.

13. The method according to claim **1** wherein examining is only done to packets traversing the first juncture in a predetermined direction.

14. A selective data-communications duplication apparatus including a computation processor having:
at least one connector for interconnection to a data-communications network at a first juncture in a network;
a first component that, for substantially every packet traversing said first juncture, examines an aggregate of at least one predetermined metric of the packet; and
a second component that, for each examined aggregate which satisfies a threshold criterion, is operative to copy the packet and to address the copy of said packet for delivery to a second juncture in the data-communications network, and is further operative to send the copy of the packet into the data-communications network via at least one of said at least one connectors.

15. A program storage device readable by a machine, tangibly embodying a program of instructions executable by the machine to perform method steps for a method for selective data-communications duplication, said method steps including: for substantially each packet of a plurality of packets traversing a first juncture in a data-communications network
examining an aggregate of at least one predetermined metric of the packet; and
if the examined aggregate satisfies a threshold criterion then sending a copy of the packet to a second juncture in the data-communications network.
